# EUROPEAN PATENT SPECIFICATION

(11) **EP 1 163 814 B1**
(45) Date of publication and mention of the grant of the patent: **10.12.2003**
(21) Application number: 00917576.1
(22) Date of filing: 16.03.2000
(51) Int. Cl.: H04Q 7/32

(54) **MOBILE STATION WITH A PLURALTIY OF INTERFACES**
MOBILSTATION MIT MEHREREN SCHNITTSTELLEN
STATION MOBILE COMPRENANT PLUSIEURS INTERFACES

(30) Priority: 16.03.1999 SE 9900954
(43) Date of publication of application: 19.12.2001
(73) Proprietor: Wm2m Communication AB, 168 67 Bromma (SE)
(72) Inventor: HENRIKSSON, Hans-Jörgen, S-113 62 Stockholm (SE)
(74) Representative: Onn, Thorsten
(86) International application number: SE0000513
(87) International publication number: WO00059246

(56) References cited:
- EP-A1- 0 398 056
- GB-A- 2 289 555

## Description

### Technical field

The present invention concerns a method for using the CPU-memory of a mobile station as interfaces for a plurality of applications that are external to the mobile station and for the mobile station *per se*.

### Prior art

Practically everyone today owns a mobile telephone. As such telephones have become available for the general public more and more applications have been established for them. Among other things, they are used for determining the position of vehicles using GPS (Global Positioning System), navigation using the said positioning system, sending of measured values from, for example, an electrical meter to a central computer, generation of a personal alarm and alarm for the theft of vehicles, often in combination with GPS, and for other monitoring tasks, such as the reading of parameters for electrical equipment in, for example, domiciles, etc.

The problem with current mobile telephones when used for such external tasks is that the external equipment must be connected to the mobile telephone via an interface in the form of a microprocessor, which adapts input and output data to the radio section of the mobile telephone. This involves additional cost and is disadvantageous for the customer and the manufacturers of the external systems, who must adapt the mobile telephones to their specific systems, such as GPS.

It would be an advantage if the customers themselves could determine what their mobile telephones are to be used for, in addition to pure radio-telephony, when purchasing them. The customer may even desire to add external applications at a later date, or even remove existing applications. This is, however, not possible with current mobile telephones, which is why there exists a need to be able to introduce applications into mobile telephones without external interfaces for adaptation to the radio section of the telephone.

The German patent application DE-A1-44 21 508 specifies a system in which the SIM-card (Subscriber Identity Module Card) of a telephone, called in German "Chip-karte" with an IC-circuit that denotes the active components of the card, can be equipped with a digital-analogue converter. A SIM-card includes an IC-circuit with a processor, that is, it is an active card. The system according to DE-A1-44 21 508, has thus an extra processor interface between the CPU of the mobile telephone and the external application, which in this case is a system for requesting help for the driver and passengers in a car.

The British patent application GB-A-2 289 555 specifies a "notebook" computer with a memory unit that does not use the free memory in the CPU of the notebook. Part of the application and word processor programs of the notebook computer are stored in the memory unit. The notebook computer does not communicate externally with devices that lack an external processor as an interface, with the exception of devices that do not require their own processor, with applications software included in the CPU memory of a mobile station.

### Summary of the invention

The present invention relates to a method and a mobile station for the use of the CPU memory of a mobile station as interface for a plurality of applications that are external to the mobile station according to the attached independent claims and further embodiments according to the attached dependent claims.

One intention of the present invention is to specify a mobile station that has been customized for communication with units that are external to the mobile station directly from the CPU, without using an external CPU as interface for the communication.

In particular, the invention specifies a method for using the CPU memory of a mobile station as interface for a plurality of applications that are external to the mobile station. Program modules for the said external applications are stored in that part of the CPU memory of the mobile station that is available after that the software that controls the conventional functions of the mobile station has been stored. The CPU of the mobile station thus performs those functions that connect external devices to the radio section of the mobile station and thus replaces a conventional external CPU as interface between external devices and the mobile station.

In one embodiment of the invention the input- and output ports of the mobile station are connected directly to the input- and output ports of the external device, via cable or in a wireless manner, whereby the mobile station is not continuously locked into an external device.

In another embodiment the CPU has an interface to each external device and its application.

A further embodiment of the invention includes the case in which one of the external devices is a position-determining device, for determining the position of the mobile station.

Another embodiment includes the case in which one of the external devices is a measuring device for measurement of at least one measurable parameter.

A further embodiment includes the case in which one of the external devices is a navigation device for navigation of a vehicle or person.

Furthermore, the invention in one embodiment includes the case in which one of the external organs is an alarm for generating an alarm concerning a condition that requires an alarm.

A further embodiment includes the case in which one of the external devices is a monitoring device for, for example, machines or a machine park.

A further embodiment includes the case in which the external organs are customized with customized applications program modules, whereby they have been determined by the user of a mobile telephone and programmed in during ordering of the mobile station, and whereby tailoring of the mobile station is achieved according to the needs of the customer. Furthermore, the applications program modules of the external devices can be erased and replaced by new applications program modules that are specific for the customer by reprogramming of free modules in an embodiment of the invention.

Furthermore, the present invention specifies a mobile station with its own CPU memory as interface to a plurality of applications that are external to the mobile station. The mobile station in this case includes:
program modules in the CPU memory for the said external applications, which are stored in that part of the CPU memory of the mobile station that is available after that the software that controls the conventional functions of the mobile station has been stored; and
that the CPU performs those functions that connect external devices to the radio section of the mobile station and thus replaces a conventional external CPU as interface between external devices and the mobile station.

Further, the mobile station can, according to the present invention, perform those embodiments that are specified in the method described above.

### Brief description of the drawing

Henceforth reference is had to the attached drawings and the explanatory text in order to obtain a better understanding of the invention and its embodiments, whereby:
**Fig. 1** illustrates schematically an embodiment of previously known technology concerning an example using GPS positioning; and
**Fig. 2** illustrates schematically an embodiment according to the present invention with the example shown in Fig. 1.

### Preferred embodiments of the described invention

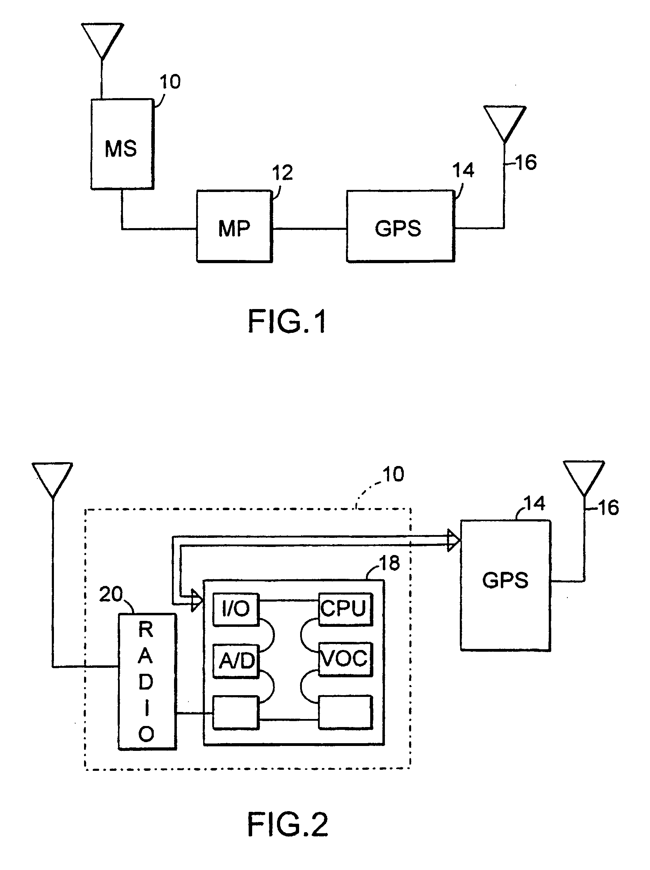

The invention according to the present description is intended to solve the problems related to interfaces for the use of external devices, such as GPS devices, alarm devices, monitoring devices, measurement devices, etc., that make use of a mobile telephone in order to send messages to a central or similar. A previously known system is illustrated in Fig. 1 for the positioning of, for example, a vehicle, animal or person. Fig. 1 illustrates schematically an embodiment of previously known technology concerning an example using GPS positioning. The system consists of a mobile station (MS) 10 that sends messages concerning the position of the bearer of the system using position information that is obtained through a GPS satellite receiver 14 with a receiving aerial 16.

In order to be able to use the mobile station 10 for radio messages, via, for example, GSM, about the position of a bearer of the same, the GPS receiver must have an interface in the form of a microprocessor 12 to the radio section of the MS 10, so that data from GPS are correctly transmitted over GSM.

Fig. 2 illustrates schematically an embodiment according to the present invention of the GSM example shown in Fig. 1.

With reference to Fig. 2 according to the present invention, the problem concerning an extra microprocessor 12 between an external device 14 and the MS 10 is solved using the insight that the CPU (Central Processor Unit) of MS 10 should be most suitable to be used as interface between external devices 14 and the radio section 20 of MS 10. The problem is solved by using the internal memory of about 1 MB of the CPU, approximately 700 KB of which are used for the telephony and/or data part of MS 10. The invention in itself is not limited concerning the size of the memory.

Most external applications according to the above require around 50 KB of memory in order to be able to serve as applications program modules, that is, computer programs that function as interfaces between the radio section 20 of MS 10 and external devices 14.

In theory, 300 KB provides space for six applications program modules.

During manufacture of MS 10 according to the present invention, an IC circuit 18 from, for example, the company Commquest ® be used. The circuit consists of a number of modules, in this case six, whereby one module provides a CPU that can be programmed for mobile telephony. Further, one module provides an I/O interface for communication with the surroundings of MS 10. A further applications program module denoted VOC (VOice Coder) provides the voice coder of the mobile telephone. One module is denoted A/D and provides an analogue/digital converter.

Fig. 2 also shows two extra modules without description, which can be used as applications program modules for external devices. The one module here is, schematically shown, connected to the radio part 20 of MS 10 in order to report the position of MS 10 to a central.

According to the present invention, the problem concerning an extra microprocessor 12 between the radio section 20 of MS 10 and external devices 14 is solved such that the input- and output ports of the mobile station can be connected directly to the input- and output ports (not shown) of the device 14. In the same way can the CPU of MS 10 have an interface to each external device and its application as long as available memory capacity in MS 10 allows this.

Furthermore, certain preferred embodiments of the present invention consist of that one of the external devices is a position-determining device 14 in order to determine the position of the mobile station 10, measurement devices for measurement of at least one measurable parameter, navigation devices for the navigation of a vehicle or a person, alarms for generating an alarm concerning a condition that requires an alarm, monitoring devices for monitoring, etc. For example, the measuring device may consist of a reader of the electricity consumption of a domicile, whereby MS 10 transmits the reading to an electrical distributor. The alarm may be an intrusion alarm with motion detector that transmits via MS 10 to an alarm central, for example, the police, in the event of an intrusion. The monitoring device may, for example, monitor the functioning of a machine or machine park in order to send messages concerning the settings of various parameters of these, and for further transmission of the parameters to a operations centre via MS 10. According to the same method, the navigation device can be used in order to specify the course information of a vehicle on a display.

The present invention is not in any way limited by the specified applications, rather a plurality of other applications that require transmission by MS 10 are possible.

The external devices 14 have hereby been achieved as specific for a customer, with customized applications, whereby they have preferably been determined and ordered by a user of MS 10, and thus programmed in during ordering of the mobile station. Tailoring of MS 10 has in this way been achieved according to the needs of the user. The applications of the external devices can even be deleted in the CPU, and replaced by new customer-specific applications program modules by programming of the available or deleted [space].

The mobile station MS 10 according to the present invention with its own CPU memory as interface 18 for a plurality of applications that are external to the mobile station includes in addition to telephony and/or computer functions that are customary for MS 10 also:
Application program modules 18 in the CPU memory for the said external applications, which are stored in that part of the CPU memory of the mobile station that is available after that the software that controls the conventional functions of the mobile stations has been stored; and
   that the CPU performs those function that connect external devices 14 to the radio section 20 of the mobile station, and thus replaces the conventional external CPU 12 as interface 18 between the external device 14 and the mobile station 10.

The CPU in one embodiment is an IC circuit 18 that includes a fixed number of modules for external applications.

The invention also allows that the mobile telephone is connected by wire or in a wireless manner via interface 18 to different external devices as required for measurement, alarm, monitoring, navigation, positioning, etc., depending on the applications program modules, which means that MS 10 does not need to be continuously locked to one external device. In this way, the area of application of MS 10 becomes very versatile and flexible. As previously discussed, a user can then use MS 10 as a mobile telephone, electrical meter reader, navigation aid, etc., without locking its use.

The present invention has been described by the use of preferred embodiments and examples, but is not limited to these because of this. It is rather the attached claims that specify further embodiments for one skilled in this technical field.

## Claims

1. Method for using the CPU memory of a mobile station (10) as interface (18) for a plurality of applications (14) that are external to the mobile station (10), **characterized in that** applications program modules for the said external applications (14) are stored **in that** part of the CPU memory of a mobile station that is available after that the software that controls the conventional functions of the mobile station has been stored, whereby the CPU of the mobile station performs those functions that connect external devices (14) to the radio section (20) of the mobile station (10) and in this way replaces a conventional external CPU (12) as interface (18) between external devices (14) and the mobile station (10).

2. Method according to claim 1, **characterized in that** the input- and output (I/O) ports of the mobile station (10) are connected directly to the input- and output ports of the external device (14) by cables or in a wireless manner, whereby the mobile station (10) is not continuously locked to the external device (14).

3. Method according to claims 1 and 2, **characterized in that** the CPU has an interface to each external device and its application.

4. Method according to claims 1-3, **characterized in that** one of the external devices (14) is a position-determining device for determining the position of the mobile station (10).

5. Method according to claims 1-4, **characterized in that** one of the external devices is a measurement device for measurement of at least one measurable parameter.

6. Method according to claims 1-5, **characterized in that** one of the external devices is a navigation device for navigation of a vehicle or person.

7. Method according to claims 1-6, **characterized in that** one of the external devices is an alarm for generating an alarm in a situation that requires an alarm.

8. Method according to claims 1-7, **characterized in that** one of the external devices is a monitoring device for monitoring conditions.

9. Method according to any of the preceding claims, **characterized in that** the external devices (14) are specific to the customer with customized applications program modules, whereby they have been determined by a user and programmed in during ordering of the mobile station, and whereby tailoring of the mobile station (10) is achieved according to the requirements of the user.

10. Method according to claim 9, **characterized in that** the applications program modules of the external devices (14) can be erased and replaced by new applications program modules specific for the customer by reprogramming free modules.

11. Method according to claims 1-10, **characterized in that** the CPU is an IC circuit (18) that includes a fixed number of modules for external applications.

12. Mobile station (10) with its own CPU memory as interface (18) to a plurality of applications that are external to the mobile station (10), **characterized in that** it includes:
applications program modules in the CPU memory for the said external applications, which are stored **in that** part of the CPU memory of the mobile station that is available after that the software that controls the conventional functions of the mobile station (10) has been stored; and
that the CPU is adapted to perform those functions that connect external devices (14) to the radio section (20) of the mobile station (10) and in this way replaces a conventional external CPU (12) as interface (18) between external devices (14) and the mobile station (10).

13. Mobile station according to claim 12, **characterized in that** the input- and output (I/O) ports of the mobile station (10) are connected directly to the input- and output ports of the external device (14) by cables or in a wireless manner, whereby the mobile station (10) is not continuously locked to the external device (14).

14. Mobile station according to claims 12 and 13, **characterized in that** the CPU has an interface (18) to each external device (14) and its application.

15. Mobile station according to claims 12-14, **characterized in that** one of the external devices is a position-determining device for determining the position of the mobile station.

16. Mobile station according to claims 12-15, **characterized in that** one of the external devices is a measurement device for measurement of at least one measurable parameter.

17. Mobile station according to claims 12-16, **characterized in that** one of the external devices is a navigation device for navigation of a vehicle or person.

18. Mobile station according to claims 12-17, **characterized in that** one of the external devices is an alarm for generating an alarm in a situation that requires an alarm.

19. Mobile station according to claims 12-18, **characterized in that** one of the external devices is a monitoring device for monitoring conditions.

20. Mobile station according to claims 12-19, **characterized in that** the external devices (14) are specific to the customer with customized applications program modules that are specific to the customer, whereby they have been determined by a user and programmed in during ordering of the mobile station (10), and whereby tailoring of the mobile station is achieved according to the requirements of the user.

21. Mobile station according to claim 20, **characterized in that** the applications program modules of the external devices (14) can be deleted and replaced by new applications program modules specific for the customer by reprogramming free modules.

22. Mobile station according to claims 12-21, **characterized in that** the CPU is an IC circuit (18) that includes a fixed number of modules for external applications.

## Patentansprüche

1. Verfahren zur Verwendung des CPU-Speichers einer Mobilstation (10) als Schnittstelle (18) für mehrere Anwendungen (14), die extern zur Mobilstation (10) sind, **dadurch gekennzeichnet, dass** die Anwendungsprogrammmodule für die externen Anwendungen (14) in diesen Teil des CPU-Speichers einer Mobilstation gespeichert sind, der verfügbar ist, nachdem die Software, welche die herkömmlichen Funktionen der Mobilstation steuert, gespeichert wurde, wodurch die CPU der Mobilstation diese Funktionen durchführt, welche externe Einrichtungen (14) mit dem Funkabschnitt (20) der Mobilstation (10) verbinden und auf diese Weise eine herkömmliche externe CPU (12) als Schnittstelle (18) zwischen externen Einrichtungen (14) und der Mobilstation (10) ersetzen.

2. Verfahren nach Anspruch 1, **dadurch gekennzeichnet, dass** die Eingangs-und-Ausgangs-Ports (I/O-Ports) der Mobilstation (10) unmittelbar mit den Eingangs-und-Ausgangs-Ports der externen Einrichtung (14) durch Kabel oder drahtlos verbunden sind, wodurch die Mobilstation (10) nicht ständig mit der externen Einrichtung (14) verriegelt ist.

3. Verfahren nach Anspruch 1 und 2, **dadurch gekennzeichnet, dass** die CPU eine Schnittstelle zu jeder externen Einrichtung und deren Anwendung hat.

4. Verfahren nach Anspruch 1-3, **dadurch gekennzeichnet, dass** eine der externen Einrichtungen (14) eine Positionsbestimmungseinrichtung ist, um die Position der Mobilstation (10) zu bestimmen.

5. Verfahren nach Anspruch 1-4, **dadurch gekennzeichnet, dass** eine der externen Einrichtungen eine Messeinrichtung ist, um zumindest einen messbaren Parameter zu messen.

6. Verfahren nach Anspruch 1-5, **dadurch gekennzeichnet, dass** eine der externen Einrichtungen eine Navigationseinrichtung zur Navigation eines Fahrzeugs oder einer Person ist.

7. Verfahren nach Anspruch 1-6, **dadurch gekennzeichnet, dass** eine der externen Einrichtungen ein Alarmgerät ist, um einen Alarm in einer Situation zu erzeugen, die einen Alarm erfordert.

8. Verfahren nach Anspruch 1-7, **dadurch gekennzeichnet, dass** eine der externen Einrichtungen eine Monitoreinrichtung zum Überwachen von Zuständen ist,

9. Verfahren nach einem der vorhergehenden Ansprüche, **dadurch gekennzeichnet, dass** die externen Einrichtungen (14) für den Kunden mit auf den Kunden zugeschnittene Anwendungsprogramm-Module sind, wobei sie durch einen Benutzer bestimmt wurden und während des Bestellens der Mobilstation programmiert wurden und wodurch das Maßschneidern der Mobilstation (10) gemäß den Erfordernissen des Benutzers erreicht wird.

10. Verfahren nach Anspruch 9, **dadurch gekennzeichnet, dass** die Anwendungsprogramm-Module der externen Einrichtungen (14) gelöscht und durch neue Anwendungsprogramm-Module speziell für den Kunden durch Neuprogrammieren freier Module ersetzt werden können.

11. Verfahren nach Anspruch 1-10, **dadurch gekennzeichnet, dass** die CPU eine IC-Schaltung (18) ist, die eine feste Anzahl von Modulen für externe Anwendungen aufweist.

12. Mobilstation (10) mit ihrem eigenen CPU-Speicher als Schnittstelle (18) für mehrere Anwendungen, welche extern zur Mobilstation (10) sind, **dadurch gekennzeichnet, dass** diese aufweist:
Anwendungsprogramm-Module im CPU-Speicher für die externen Anwendungen, welche in diesem Teil des CPU-Speichers der Mobilstation gespeichert sind, die verfügbar ist, nachdem die Software, welche die herkömmliche Funktionen der Mobilstation (10) steuert, gespeichert wurde; und
dass die CPU angepasst ist, diese Funktionen, welche externe Einrichtungen (10) mit dem Funk-Abschnitt der Mobilstation (10) verbinden, durchzuführen und auf diese Weise eine herkömmliche externe CPU (12) als Schnittstelle (18) zwischen externen Einrichtungen (14) und der Mobilstation (10) ersetzt.

13. Mobilstation nach Anspruch 12, **dadurch gekennzeichnet, dass** die Eingangsund Ausgangsports (I/O) der Mobilstation (10) unmittelbar mit den Eingangs- und Ausgangsports der externen Einrichtung (14) durch Kabel oder drahtlos verbunden sind, wodurch die Mobilstation (10) nicht ständig mit der externen Einrichtung (14) verriegelt ist.

14. Mobilstation nach Anspruch 12 und 13, **dadurch gekennzeichnet, dass** die CPU eine Schnittstelle (18) mit jeder externen Einrichtung (14) und deren Anwendung hat.

15. Mobilstation nach Anspruch 12-14, **dadurch gekennzeichnet, dass** eine der externen Einrichtungen eine Positionsbestimmungseinrichtung zum Bestimmen der Position der Mobilstation ist.

16. Mobilstation nach Anspruch 12-15, **dadurch gekennzeichnet, dass** eine der externen Einrichtungen eine Messeinrichtung zum Messen von zumindest eines messbaren Parameters ist.

17. Mobilstation nach Anspruch 12-16, **dadurch gekennzeichnet, dass** eine der externen Einrichtungen eine Navigationseinrichtung zum Navigieren eines Fahrzeugs oder einer Person ist.

18. Mobilstation nach Anspruch 12-17, **dadurch gekennzeichnet, dass** eine der externen Einrichtungen eine Alarmeinrichtung zum Erzeugen eines Alarms in einer Situation, welche einen Alarm erfordert, ist.

19. Mobilstation nach Anspruch 12-18, **dadurch gekennzeichnet, dass** eine der externen Einrichtungen eine Monitoreinrichtung zum Überwachen von Zuständen ist.

20. Mobilstation nach Anspruch 12-19, **dadurch gekennzeichnet, dass** die externen Einrichtungen (14) speziell auf den Kunden zugeschnittene Anwendungsprogramm-Module sind, die speziell für den Kunden sind, wobei sie durch einen Benutzer bestimmt wurden und während des Bestellens der Mobilstation (10) programmiert wurden, und wobei das Maßschneidern der Mobilstation gemäß den Erfordernissen des Benutzers erreicht wird.

21. Mobilstation nach Anspruch 20, **dadurch gekennzeichnet, dass** auf die Anwendungsprogramm-Module der externen Einrichtungen verzichtet werden kann, und diese durch neue Anwendungsprogramm-Module speziell für den Kunden durch Neuprogrammieren freier Module ersetzt werden können.

22. Mobilstation nach Anspruch 12-21, **dadurch gekennzeichnet, dass** die CPU eine IC-Schaltung (18) ist, welche eine feste Anzahl von Modulen für externe Anwendungen aufweist.

## Revendications

1. Procédé pour utiliser la mémoire d'une unité centrale (CPU) d'une station mobile (10) en tant qu'interface (18) pour une pluralité d'applications (14) qui sont externes à la station mobile (10),
**caractérisé en ce que** des modules de programme d'applications pour lesdites applications externes (14) sont mémorisés dans cette partie de la mémoire d'unité centrale d'une station mobile qui est disponible après que le logiciel qui commande les fonctions classiques de la station mobile a été mémorisé, ainsi l'unité centrale de la station mobile réalise ces fonctions qui connectent des dispositifs externes (14) à la section radio (20) de la station mobile (10) et de cette façon, remplace une unité centrale externe classique (12) en tant qu'interface (18) entre les dispositifs externes (14) et la station mobile (10).

2. Procédé selon la revendication 1, **caractérisé en ce que** les points d'accès d'entrée et sortie (I/O) de la station mobile (10) sont connectés directement aux points d'accès entrée et sortie du dispositif externe (14) par des câbles ou de manière sans fil, ce par quoi la station mobile (10) n'est pas verrouillée en continu au dispositif externe (14).

3. Procédé selon les revendications 1 et 2, **caractérisé en ce que** l'unité centrale possède une interface pour chaque dispositif externe et son application.

4. Procédé selon les revendications 1 à 3, **caractérisé en ce que** l'un des dispositifs externes (14) est un dispositif déterminant une position pour déterminer la position de la station mobile (10).

5. Procédé selon l'une quelconque des revendications 1 à 4, **caractérisé en ce que** l'un des dispositifs externes est un dispositif de mesure pour la mesure d'au moins un paramètre mesurable.

6. Procédé selon l'une quelconque des revendications 1 à 5, **caractérisé en ce que** l'un des dispositifs externes est un dispositif de navigation pour la navigation d'un véhicule ou d'une personne.

7. Procédé selon l'une quelconque des revendications 1 à 6, **caractérisé en ce que** l'un des dispositifs externes est une alarme pour déclencher une alarme dans une situation qui exige une alarme.

8. Procédé selon l'une quelconque des revendications 1 à 7, **caractérisé en ce que** l'un des dispositifs externes est un dispositif de contrôle pour contrôler des conditions.

9. Procédé selon l'une quelconque des revendications précédentes, **caractérisé en ce que** les dispositifs externes (14) sont spécifiques aux clients avec des modules de programme d'applications personnalisés, ce par quoi ils ont été déterminés par un utilisateur et programmés pendant la commande de la station mobile, et ainsi la personnalisation de la station mobile (10) est réalisée selon les exigences de l'utilisateur.

10. Procédé selon la revendication 9, **caractérisé en ce que** les modules de programmes d'applications des dispositifs externes (14) peuvent être effacés et remplacés par de nouveaux modules de programme d'applications spécifiques au client par reprogrammation des modules.

11. Procédé selon l'une quelconque des revendications 1 à 10, **caractérisé en ce que** l'unité centrale est un circuit intégré (CI) (18) qui inclut un nombre fixé de modules pour des applications externes.

12. Station mobile (10) avec sa propre mémoire d'unité centrale en tant qu'interface (18) à une pluralité d'applications qui sont externes à la station mobile (10), **caractérisée en ce qu'**elle inclut :
- des modules de programme d'applications dans la mémoire d'unité centrale pour lesdites applications externes, qui sont mémorisés dans cette partie de la mémoire d'unité centrale de la station mobile qui est disponible après que le logiciel qui commande les fonctions classiques de la station mobile (10) a été mémorisé ; et
- que l'unité centrale est adaptée pour réaliser ces fonctions qui connectent des dispositifs externes (14) à la section radio (20) de la station mobile (10) et de cette façon, remplace une unité centrale externe classique (12) en tant qu'interface (18) entre les dispositifs externes (14) et la station mobile (10).

13. Station mobile selon la revendication 12, **caractérisée en ce que** les points d'accès entrée et sortie (I/O) de la station mobile (10) sont connectés directement aux points d'accès entrée et sortie du dispositif externe (14) par des câbles ou de manière sans fil, ainsi la station mobile (10) n'est pas verrouillée en continu au dispositif externe (14).

14. Station mobile selon l'une quelconque des revendications 12 et 13, **caractérisée en ce que** l'unité centrale possède une interface (18) pour chaque dispositif externe (14) et son application.

15. Station mobile selon l'une quelconque des revendications 12 à 14, **caractérisée en ce que** l'un des dispositifs externes est un dispositif déterminant une position pour déterminer la position de la station mobile.

16. Station mobile selon l'une quelconque des revendications 12 à 15, **caractérisée en ce que** l'un des dispositifs externes est un dispositif de mesure pour la mesure d'au moins un paramètre mesurable.

17. Station mobile selon l'une quelconque des revendications 12 à 16, **caractérisée en ce que** l'un des dispositifs externes est un dispositif de navigation concernant la navigation d'un véhicule ou d'une personne.

18. Station mobile selon l'une quelconque des revendications 12 à 17, **caractérisée en ce que** l'un des dispositifs externes est une alarme pour déclencher une alarme dans une situation qui exige une alarme.

19. Station mobile selon l'une quelconque des revendications 12 à 18, **caractérisée en ce que** l'un des dispositifs externes est un dispositif de contrôle pour contrôler des conditions.

20. Station mobile selon l'une quelconque des revendications 12 à 19, **caractérisée en ce que** les dispositifs externes (14) sont spécifiques au client avec des modules de programme d'applications personnalisés qui sont spécifiques au client, grâce à quoi ils ont été déterminés par un utilisateur et programmés pendant la commande de la station mobile (10), et grâce à quoi la personnalisation de la station mobile est réalisée selon les exigences de l'utilisateur.

21. Station mobile selon la revendication 20, **caractérisée en ce que** les modules de programme d'applications des dispositifs externes (14) peuvent être supprimés et remplacés par de nouveaux modules de programme d'applications spécifiques au client en reprogrammant des modules libres.

22. Station mobile selon l'une quelconque des revendications 12 à 21, **caractérisée en ce que** l'unité centrale est un circuit intégré (CI) (18) qui inclut un nombre fixé de modules pour des applications externes.
